# EUROPEAN PATENT SPECIFICATION

(11) **EP 1 872 903 B1**
(45) Date of publication and mention of the grant of the patent: **08.10.2008**
(21) Application number: 06425453.5
(22) Date of filing: 30.06.2006
(51) Int. Cl.: B23Q 16/00, B23Q 5/52, B23B 13/12

(54) **Equipment for positioning a support member**
Einrichtung zur Positionierung eines Tragelements
Equipement pour le positionnement d'un élément de support

(43) Date of publication of application: 02.01.2008
(73) Proprietor: ME.C.AL. S.p.A., 27030 Frascarolo (PV) (IT)
(72) Inventor: Cavezzale, Ennio, c/o ME.C.AL S.p.A., 27030 Frascarolo (PV) (IT); Gili, Renzo, c/o ME.C.AL S.p.A., 27030 Frascarolo (PV) (IT)
(74) Representative: Perani, Aurelio

(56) References cited:
- EP-A2- 0 472 778
- GB-A- 1 493 061
- JP-A- 62 228 348

## Description

This invention relates to an equipment for positioning a support member according to the preamble of claim 1 as seen in document GB-1493061.

The equipment for positioning the support member according to the invention finds application in machine tools in which it is necessary to control the positioning of support members designed to support workpieces or machining tools.

For example, in the sector of the manufacture of frames, positioning equipments are widely used in machines for welding sections of both metal or plastic materials which are intended to be joined together at an angle in order to form the frame.

A typical machine for the welding of sections in fact comprises a bearing housing and a supporting slide for each of the sections which has to be welded, a supporting guide for the slide and an equipment for positioning the supporting slide.

In the case in point, the equipment for positioning the supporting slide for the individual sections comprises a pneumatically operated piston to which the supporting slide is attached. In the course of welding, the piston is operated to move the supporting slide between two opposed end-of-stroke positions corresponding to a resting position, and a working position in which the two sections are welded.

Although positioning equipment of the type described above makes it possible to move the supporting slides and to carry out welding of metal sections, it may be unsuitable when it is desired to weld sections of plastics material together. In fact in the welding of sections of plastics material, in order to optimise welding and control the dimensions of the weld bead it is necessary to provide for one or more intermediate positions of the sections between the two opposed end-of-stroke positions of the piston or slide.

From what has been stated above there arises the need to have equipment for positioning a support member which makes it possible to position the support member in at least one intermediate position lying between the two opposed end-of-stroke positions of the support member.

The object of this invention is therefore to provide equipment for positioning a support member which has structural and functional characteristics such as to satisfy the abovementioned requirements and at the same time to overcome the disadvantages found with reference to the known art.

This object is accomplished by a support member according to claim 1.

Further features and advantages of the equipment for positioning a support member according to this invention will be apparent from the description of a preferred embodiment provided below, provided by way of indication and without restriction, with reference to the appended figures, in which:

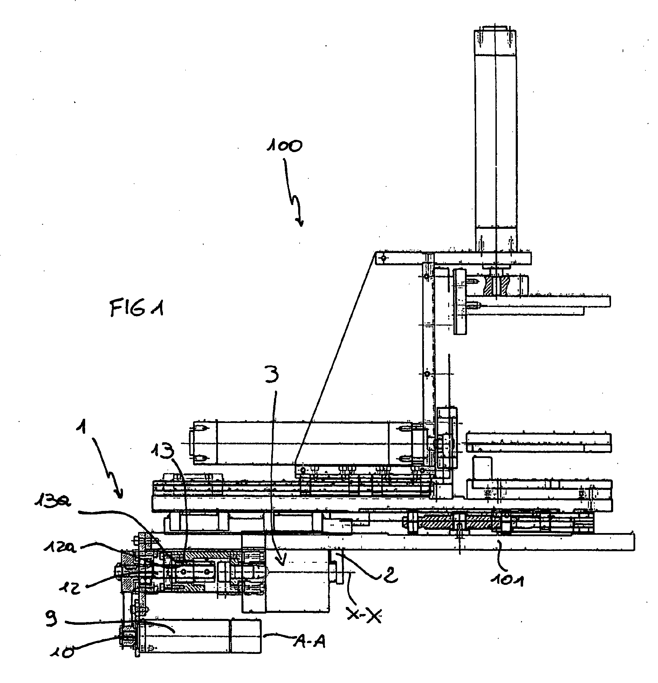

- Figure 1 shows a diagrammatical view of a section welding machine comprising equipment for positioning the support members according to this invention,

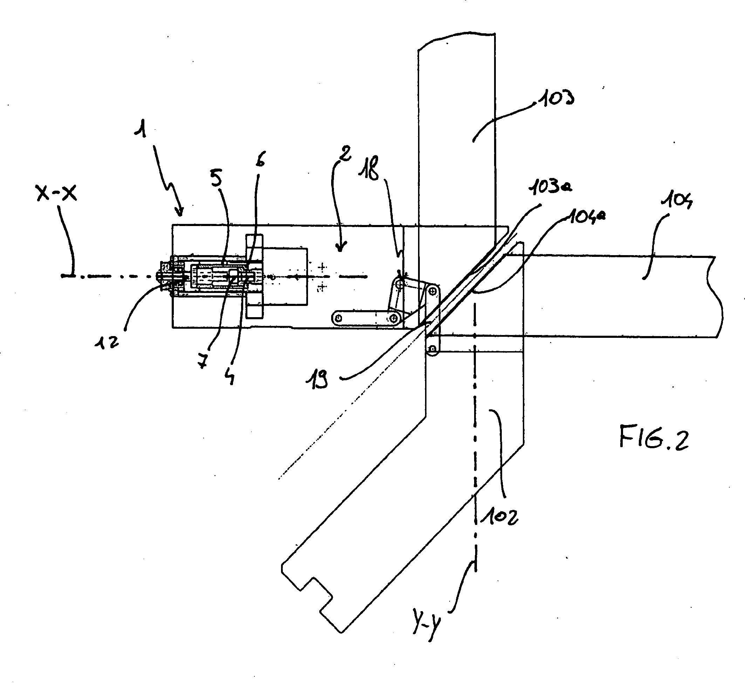

- Figure 2 shows a diagrammatical view of the base of the machine in Figure 1,
- Figures 3 to 7 show diagrammatical views in partial cross-section of the equipment in Figure 1 in different operating configurations.

With reference to the appended figures, 1 indicates as a whole equipment for positioning a support member 2. Support member 2 may be designed to support a workpiece or a machine tool.

The equipment 1 comprises first operating means, indicated overall by 3, able to move the support member 2. The operating means 3 comprise a piston 4 attached to support member 2 extending along a direction X-X and moving along this direction X-X between two opposed end-of-stroke positions so that the support member 2 can also move between two opposed end-of-stroke positions.

The opposed end-of-stroke positions for piston 4 correspond, for example, to a resting position and a working position of support member 2 respectively.

Advantageously operating means 3 are fluid-dynamic operating means, for example pneumatic or hydraulic means.

In order to cause piston 4 to move in the X-X direction fluid-dynamic supply means, not shown in the figures, which are in themselves known and therefore not further described, are provided.

Positioning equipment 1 also comprises a cursor 5 which can move along the X-X direction and is provided with an abutment member 6 which is solidal with cursor 5 itself.

A corresponding stop member 7 is attached to piston 4 and is able to abut against abutment member 6 of cursor 5 to stop the stroke of piston 4 in at least one position lying between the two opposed end-of-stroke positions.

In particular, equipment 1 comprises second operating means, indicated as a whole by 8, able to move cursor 5 along the X-X direction and to stop that cursor 5 in at least one position in which stop member 7 of piston 4 abuts against abutment member 6 of cursor 5, piston 4 stops its stroke in a corresponding position lying between the two opposed end-of-stroke positions.

In this way support member 2 can be stopped in at least one intermediate position lying between the resting position and the working position. Advantageously this intermediate position constitutes a second working position such that support member 2 can move between a resting position and at least two distinct working positions identified along direction X-X.

From the above it is apparent that equipment 1 according to this invention makes it possible to stop support member 2 or the workpiece supported by it at different working positions identified along the X-X direction of movement of piston 4 positioning support member 2.

Advantageously, stop member 7 abuts against abutment member 6 when piston 4 is operated to move in the X-X direction in the direction indicated by arrow B in the figures, that is when piston 4 moves to move support member 2 from the resting position to a working position.

Advantageously, second operating means 8 are able to stop cursor 5 in a plurality of positions to permit piston 4 to stop in a corresponding plurality of positions lying between the two opposed end-of-stroke positions of piston 4. This makes it possible to further increase the number of intermediate positions lying between the resting position and the working position in which support member 2 and therefore the workpiece supported by it may stop.

Advantageously, second operating means 8 are electrical operating means. In particular electrical operating means 8 comprise an electric motor 9 having a drive shaft 10 which can be driven in rotation about an axis of rotation A-A, which in the example is parallel to the X-X direction. Kinematic means, indicated as a whole by 11, are provided in equipment 1 and are kinematically coupled to drive shaft 10 and cursor 5 to transform the rotary motion of drive shaft 10 into translational movement of cursor 5 along the X-X direction.

In accordance with the embodiment illustrated in the appended figures, kinematic means 11 comprise a screw-nut assembly comprising a screw 12 bearing a thread 12a which can be driven in rotation by drive shaft 10 and a nut 13 bearing a corresponding thread 13a which is solidal with cursor 5.

In the example, rotational movement of drive shaft 10 is transmitted to screw 12 through drive transmission means 14. Alternatively, drive shaft 10 of motor 9 may directly engage screw 12.

Motion transmission means 14 comprise a first pulley 15 wedged onto drive shaft 10, a second pulley 16 wedged onto screw 12 and a transmission belt 17 which transmits the rotational movement of drive shaft 10 to screw 12.

According to the embodiment illustrated in the appended figures, cursor 5 comprises a tubular sleeve, mainly extending in the X-X direction, at one end of which there is provided an annular flange 6 acting as an abutment member for cursor 5. In particular annular flange 6 extends in a radial direction within tubular sleeve 5 in such a way as to form an abutment plane 6a.

Tubular sleeve 5 is mounted coaxially with piston 4 in such a way as to axially enclose the terminal portion 4a of piston 4 where stop member 7 is located.

According to the embodiment illustrated in the appended figures, stop member 7 takes the form of a washer fixed to piston 4 at its end 4a which has a stop surface 7a designed to abut against abutment plane 6a of annular flange 6 of sleeve 5.

In a manner which is in itself known, electronic control means will be provided for controlling the operation of first operating means 3 and second operating means 8, in the example illustrated in the appended figures in order to control the operation of electric motor 9 and the pneumatic feed to piston 4.

Application of equipment 1 according to this invention to a machine tool, in the case in point to a machine 100 for welding two sections of plastics material 103, 104 is described below.

It should however be pointed out that equipment 1 according to the invention may be applied to any type of machine tool in which there is a need to control the positioning of a support member between a resting position and a number of working positions.

In a manner which is in itself known, machine 100 comprises a bearing housing (not shown in the figures) and guide means fixed to the bearing housing in order to movably support two support members 2, 102.

In the case in point, welding machine 100 comprises a first guide 101 which supports support member 2 able to support first section 103 in such a manner that it can move along the direction X-X. The machine also comprises a second slide (not shown in the figures) which supports a second support member 102 able to support the second section 104 in a manner such that it can move along the direction Y-Y.

Positioning of the support member 2 is carried out through the equipment 1 according to this invention.

Positioning of the support member 102 may be carried out by providing identical equipment 1 according to this invention for that support member 102, or, as illustrated in the appended figures, by providing suitable synchronisation means 18 coupled to first support member 2 and second support member 102 in order to synchronise the motion of second support member 102 with the motion of first support member 2 brought about by equipment 1.

In a preferred embodiment synchronisation means 18 comprise an articulated system of levers hinged to first support member 2 and second support member 102 in such a way that following movement of first support member 2 along a particular distance S in the X-X direction there is a corresponding movement of second support member 102 over the same distance S in the Y-Y direction.

A method for welding two sections using equipment 1 according to the invention will now be described.

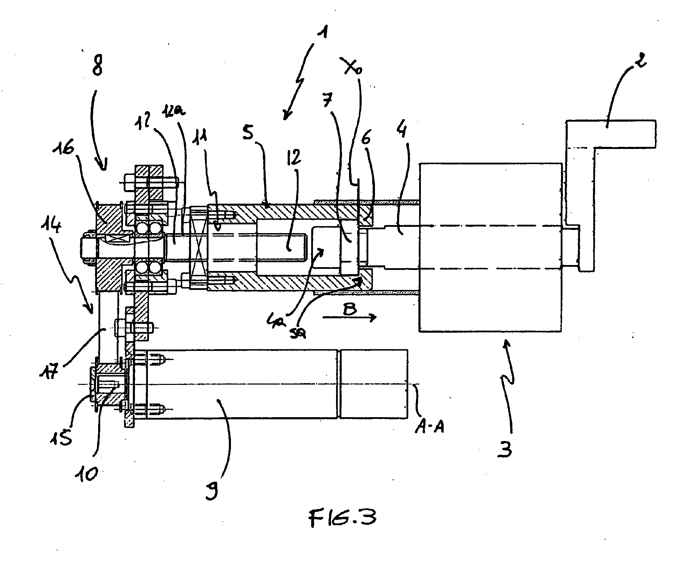

It is assumed that, at the beginning, cursor 5 lies in the position X₀ and that piston 4 is in the end-of-stroke position (Figure 3). In the example illustrated in Figure 3, washer 7 of piston 4 abuts against flange 6 of cursor 5. However it is obvious that the cursor may also be in another position. In this case a signal for set to zero the equipment 1 would bring both cursor 5 into position X₀ and piston 4 with washer 7 abutting against flange 6 of cursor 5.

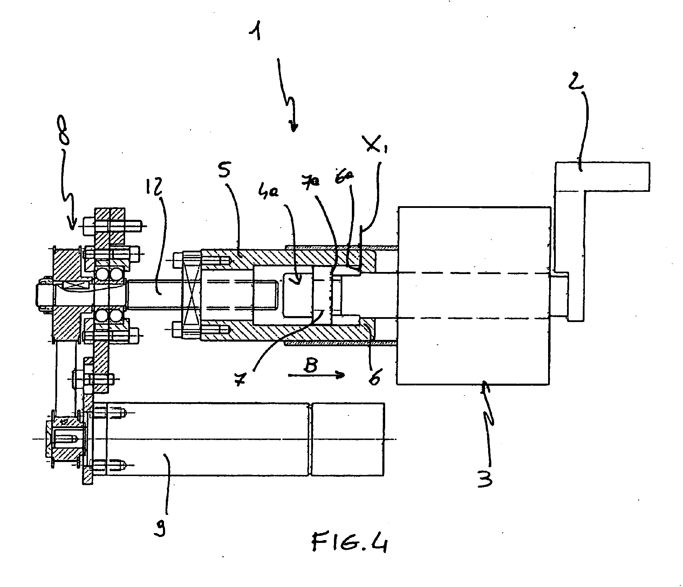

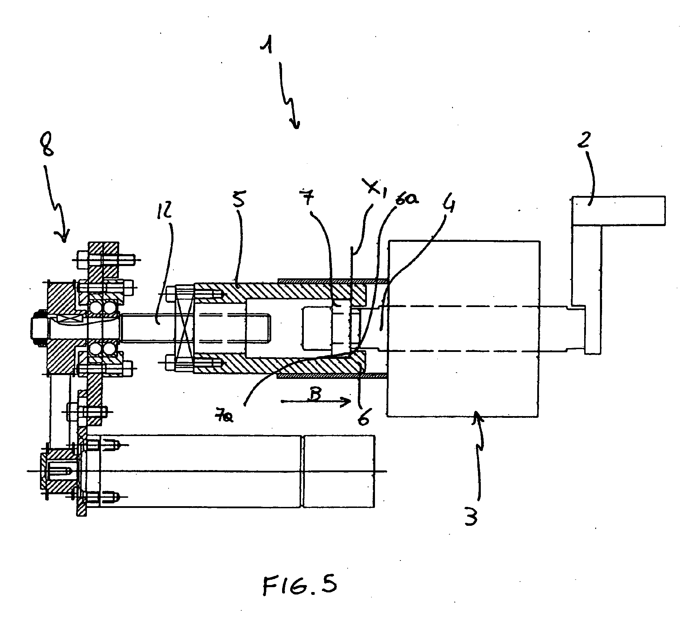

In order that sections 103, 104 can be loaded onto corresponding support members 2, 102, electric motor 9 is operated to move cursor 5 to a position X₁ (Figure 4). At this point piston 4 is operated so as to move along X-X in the direction indicated by arrow B and this movement of piston 4 is stopped when washer 7 abuts against flange 6 of cursor 5 (Figure 5). Because piston 4 is integrally attached to support member 2, when piston 4 moves of a movement S = X₁ - X₀ there is a corresponding movement S = X₁ - X₀ of support member 2. It should also be pointed out that, because of synchronisation means 18, movement of support member 2 fixed to piston 4 is transferred to support member 102 which moves of the same distance S = X₁ - X₀ in the Y-Y direction. In this position sections 103, 104 are loaded onto corresponding support members 2, 102 and vertically immobilised with respect to them.

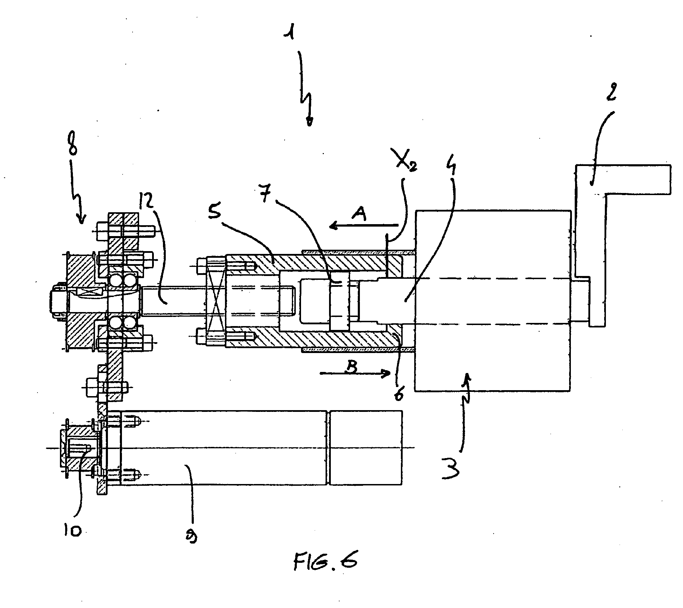

Subsequently piston 4 is operated to move to the end-of-stroke position in the direction indicated by arrow A (Figure 6).

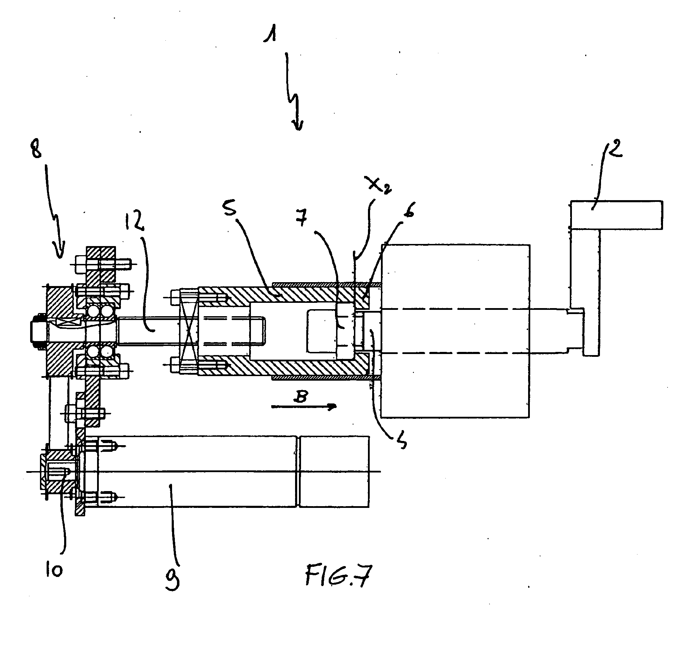

In the subsequent stage electric motor 9 is operated to move cursor 5 into position X₂ so that the cross-section of sections 103, 104 can be heated (Figure 6). At this point heating bar 19 is moved into the welding area and piston 4 is operated, its movement in direction B along X-X stopping when washer 7 abuts against flange 6 of cursor 5 (Figure 7). In this position the corresponding end 103a, 104a of sections 103, 104 are presented to heating bar 19 in such a way that heating bar 19 can heat ends 103a, 104a and prepare them for welding.

Subsequently piston 4 is operated to return to the end-of-stroke position so that heating bar 19 can move out of the welding area. Finally, in order to perform the operation of welding sections 103, 104, cursor 5 is first operated to move to a position X₃ (not shown in the figures) and piston 4 which brings ends 103a, 104a of sections 103, 104 into contact by welding is then operated.

At the end of the welding operation the two sections 103, 104 which are welded together are vertically released and removed from the welding area and support members 2, 102 return to the resting position following the movement of piston 4 in direction A, ready to perform a further loading of sections requiring welding.

As may be appreciated from what has been described, the equipment for positioning a support member according to the invention makes it possible to satisfy the requirements mentioned in the introductory part to this description and to overcome the disadvantages of the control devices in the known art. In particular the equipment according to the invention makes it possible to move the support member between a resting position and at least two separate working positions so as to permit different operations to be carried out at the two different working positions.

Obviously, in order to satisfy contingent and specific requirements a person skilled in the art could apply many modifications and variants to the equipment according to the invention described above, all of which however are included within the scope of protection of the invention as defined by the following claims.

## Claims

1. Equipment (1) for positioning a support member (2), said equipment (1) comprising:
- first operating means (3) able to move said support member (2) along a direction (X-X), said first operating means (3) comprising a piston (4) attached to said support member (2), said piston (4) being movable along said direction (X-X) between two opposed end-of-stroke positions,
**characterised in that** it comprises
- a cursor (5) movable along said direction (X-X) and provided with an abutment member (6), said piston (4) being provided with a stop member (7) able to abut against said abutment member (6) of the cursor (5), and
- second operating means (8) able to move said cursor (5) along said direction (X-X) and to stop said cursor (5) in at least one position in which said piston (4) stops in at least one corresponding position lying between said two opposed end-of-stroke positions, when the stop member (7) of the piston (4) abuts against the abutment member (6) of the cursor (5).

2. Equipment (1) according to claim 1, in which said second operating means (8) are able to stop said cursor (5) in a plurality of positions to allow said piston (4) to stop in a corresponding plurality of positions lying between said two opposed end-of-stroke positions.

3. Equipment (1) according to claim 1 or 2, in which said first operating means (3) are fluid-dynamic operating means and said second operating means (8) are electrical operating means.

4. Equipment according to any one of claims 1 to 3, in which said second operating means (8) comprise an electric motor (9) having a drive shaft (10) which can be driven in rotation about an axis of rotation (A-A), said equipment (1) comprising kinematic means (11) coupled to said drive shaft (10) and said cursor (5) to convert the rotary motion of said drive shaft (10) into translational motion of said cursor (5) along said direction (X-X).

5. Equipment (1) according to claim 4, in which said kinematic means (11) comprise a screw-nut assembly comprising a screw (12) which can be driven in rotation by said drive shaft (10) and a nut (13) which is attached to said cursor (5).

6. Equipment (1) according to claim 4 or 5, comprising motion transmission means (14) for transmitting the rotatory movement of said drive shaft (10) to said kinematic means (11).

7. Equipment (1) according to any one of claims 1 to 6, in which said cursor (5) is constituted of a tubular sleeve and said abutment member (6) comprises an annular flange which is located at one end (5a) of said cursor (5) and which identifies an abutment plane (6a).

8. Equipment (1) according to any one of claims 1 to 6, in which said stop member (7) is a washer attached to the piston (4) at one end (4a) thereof and having a stop surface (7a).

9. Equipment (1) according to claims 7 and 8, in which said stop surface (7a) is intended to abut against said abutment plane (6a) to stop the stroke of said piston (4).

10. Machine (100) for machining a workpiece, comprising:
- a bearing structure,
- guide means attached to said bearing structure,
- a support member (2) slidly mounted on said guide means to move in a direction (X-X), said support member (2) being intented to support said workpiece,
- an equipment (1) for positioning said support member (2) in accordance with any one of claims 1 to 9.

11. Machine (100) for welding together a first section (103) and a second section (104), comprising:
- a bearing structure,
- first (101) and second guide means attached to said bearing structure,
- a first support member (2) able to support said first section (103), said first support member (2) being slidly mounted on said first guide means (101) to move along a first direction (X-X),
- a second support member (102) able to support said second section (104), said second support member (102) being slidly mounted on said second guide means to move in a second direction (Y-Y),
- an equipment (1) for positioning said first support member (2) in accordance with any one of claims 1 to 9,
- synchronising means (18) coupled to said first support member (2) and said second support member (102) to synchronise the movement of said second support member (102) with the movement of said first support member (2) brought about by said equipment (1) in such a way that following movement of the first support member (2) through a particular distance (S) along said first direction (X-X) there is a corresponding movement of the second support member (102) through the same distance (S) along said second direction (Y-Y).

## Patentansprüche

1. Einrichtung (1) zum Positionieren eines Tragelementes (2), wobei die Einrichtung (1) aufweist:
- erste Betriebsmittel (3), die in der Lage sind, das Tragelement (2) entlang einer Richtung (X-X) zu bewegen, wobei die ersten Betriebsmittel (3) einen an dem Tragelement (2) befestigten Kolben (4) aufweisen, wobei der Kolben (4) entlang der Richtung (X-X) zwischen zwei gegenüberliegenden Hubendepositionen bewegbar ist,
**dadurch gekennzeichnet, dass** sie aufweist:
- einen Läufer (5), der entlang der Richtung (X-X) bewegbar und mit einem Widerlagerelement (6) versehen ist, wobei der Kolben (4) mit einem Anschlagelement (7) versehen ist, das an dem Widerlagerelement (6) des Läufers (5) anschlagen kann, und
- zweite Betriebsmittel (8), die in der Lage sind, den Läufer (5) entlang der Richtung (X-X) zu bewegen, und den Läufer (5) in wenigstens einer Position anzuhalten, in welcher der Kolben (4) in wenigstens einer zwischen zwei gegenüberliegenden Hubendepositionen liegenden entsprechenden Position anhält, wenn das Anschlagelement (7) des Kolbens (4) an dem Widerlagerelement (6) des Läufers (5) anschlägt.

2. Einrichtung (1) nach Anspruch 1, in welcher die zweiten Betriebsmittel (8) in der Lage sind, den Läufer (5) in mehreren Positionen anzuhalten, um ein Anhalten des Kolbens (4) in entsprechenden mehreren zwischen den zwei gegenüberliegenden Hubendepositionen liegenden Positionen zu ermöglichen.

3. Einrichtung (1) nach Anspruch 1 oder 2, in welcher die ersten Betriebsmittel (3) fluid-dynamische Betriebsmittel sind und die zweiten Betriebsmittel (8) elektrische Betriebsmittel sind.

4. Einrichtung (1) nach einem der Ansprüche 1 bis 3, in welcher die zweiten Betriebsmittel (8) einen elektrischen Motor (9) mit einer Antriebswelle (10) aufweisen, welche um eine Rotationsachse (A-A) drehend angetrieben werden kann, wobei die Einrichtung (1) mit der Antriebswelle (10) und dem Läufer (5) gekoppelte kinematische Mittel (11) aufweist, um die Drehbewegung der Antriebswelle (10) in eine Verschiebungsbewegung des Läufers (5) entlang der Richtung (X-X) umzuwandeln.

5. Einrichtung (1) nach Anspruch 4, in welcher die kinematischen Mittel (11) eine Spindel-Mutter-Anordnung mit einer Spindel (12) aufweisen, welche drehend durch die Antriebswelle (10) angetrieben werden kann, und eine Mutter (13), welche an dem Läufer (5) befestigt ist.

6. Einrichtung (1) nach Anspruch 4 oder 5, mit Bewegungsübertragungsmitteln (14) zum Übertragen der Drehbewegung der Antriebswelle (10) auf die kinematischen Mittel (11).

7. Einrichtung (1) nach einem der Ansprüche 1 bis 6, in welcher der Läufer (5) aus einer rohrförmigen Hülse besteht und das Widerlagerelement (6) einen ringförmigen Flansch aufweist, welcher sich an einem Ende (5a) des Läufers (5) befindet, und welcher eine Widerlagerebene (6a) identifiziert.

8. Einrichtung (1) nach einem der Ansprüche 1 bis 6, in welcher das Anschlagelement (7) eine an einem Ende (4a) an dem Kolben (4) befestigte Scheibe ist und eine Anschlagoberfläche (7a) besitzt.

9. Einrichtung (1) nach Anspruch 7 und 8, in welcher die Anschlagfläche (7a) dafür vorgesehen ist, an der Widerlagerebene (6a) anzuschlagen, um den Hub des Kolbens (4) zu beenden.

10. Maschine (100) zum Bearbeiten eines Werkstückes, aufweisend:
- eine Lagerungsstruktur,
- an der Lagerungsstruktur angebrachte Führungsmittel,
- ein auf den Führungsmitteln verschiebbar montiertes Tragelement (2) zur Bewegung in einer Richtung (X-X), wobei das Tragelement (2) dafür vorgesehen ist, das Werkstück zu tragen,
- eine Einrichtung (1) zum Positionieren des Tragelementes (2) gemäß einem der Ansprüche 1 bis 9.

11. Maschine (100) zum Zusammenschweißen eines ersten Abschnittes (103) und eines zweiten Abschnittes (104), aufweisend:
- eine Lagerungsstruktur,
- erste (101) und zweite Führungsmittel, die an der Lagerungsstruktur angebracht sind,
- ein erstes Tragelement (2), das in der Lage ist, den ersten Abschnitt (103) zu tragen, wobei das erste Tragelement (2) verschiebbar auf den ersten Führungsmitteln (101) zur Bewegung entlang einer ersten Richtung (X-X) montiert ist,
- ein zweites Tragelement (102), das in der Lage ist, den zweiten Abschnitt (104) zu tragen, wobei das zweite Tragelement (102) verschiebbar auf den zweiten Führungsmitteln zur Bewegung in einer zweiten Richtung (Y-Y) montiert ist,
- eine Einrichtung (1) zum Positionieren des ersten Tragelementes (2) gemäß einem der Ansprüche 1 bis 9,
- Synchronisationsmittel (18), die mit dem ersten Tragelement (2) und dem zweiten Tragelement (102) gekoppelt sind, um die Bewegung des zweiten Tragelementes (102) mit der durch die Einrichtung (1) zustande gebrachten Bewegung des ersten Tragelementes (2) in einer solchen Weise zu synchronisieren, dass anschließend an die Bewegung des ersten Tragelementes (2) über eine spezielle Strecke (S) entlang der ersten Richtung (X-X) eine entsprechende Bewegung des zweiten Tragelementes (102) über dieselbe Strecke (S) entlang der zweiten Richtung (Y-Y) erfolgt.

## Revendications

1. Equipement (1) permettant de positionner un élément (2) formant un support, ledit équipement (1) comprenant :
- de premiers moyens (3) de fonctionnement, à même de déplacer ledit élément (2) formant un support le long d'une direction (X-X), lesdits premiers moyens (3) de fonctionnement comportant un piston (4) attaché audit élément (2) formant un support, ledit piston (4) pouvant se déplacer le long de ladite direction (X-X) entre deux positions opposées de fin de course,
**caractérisé en ce qu'**il comprend
- un curseur (5) mobile le long de ladite direction (X-X) et doté d'un élément (6) formant une butée, ledit piston (4) étant doté d'un élément (7) formant une butée à même de venir en butée contre ledit élément (6) formant une butée du curseur (5), et
- de deuxièmes moyens (8) de fonctionnement, à même de déplacer ledit curseur (5) le long de ladite direction (X-X) et d'arrêter ledit curseur (5) dans au moins une position dans laquelle ledit piston (4) s'arrête dans au moins une position correspondante en se trouvant entre lesdites deux positions opposées de fin de course, quand l'élément (7) formant une butée du piston (4) vient en butée contre l'élément (6) formant une butée du curseur (5).

2. Equipement (1) selon la revendication 1, dans lequel lesdits deuxièmes moyens (8) de fonctionnement sont capables d'arrêter ledit curseur (5) dans une pluralité de positions afin de permettre audit piston (4) de s'arrêter dans une pluralité correspondante de positions se trouvant entre lesdites deux positions opposées de fin de course.

3. Equipement (1) selon la revendication 1 ou 2, dans lequel lesdits premiers moyens (3) de fonctionnement sont des moyens de fonctionnement fondés sur la dynamique des fluides et où lesdits deuxièmes moyens (8) de fonctionnement sont des moyens de fonctionnement électriques.

4. Equipement (1) selon l'une quelconque des revendications 1 à 3, dans lequel lesdits deuxièmes moyens (8) de fonctionnement comprennent un moteur électrique (9) comportant un arbre d'entraînement (10) qui peut être entraîné en rotation autour d'un axe de rotation (A-A), ledit équipement (1) comportant des moyens cinématiques (11) couplés audit arbre (10) d'entraînement et audit curseur (5), afin de convertir le mouvement de rotation dudit arbre (10) d'entraînement en mouvement de translation dudit curseur (5) le long de ladite direction (X-X).

5. Equipement (1) selon la revendication 4, dans lequel lesdits moyens cinématiques (11) comprennent un ensemble à vis et à écrou, comprenant une vis (12) qui peut être entraînée en rotation par ledit arbre (10) d'entraînement et un écrou (13) qui est attaché audit curseur (5).

6. Equipement (1) selon la revendication 4 ou 5, comprenant des moyens (14) de transmission de mouvement permettant de transmettre le mouvement de rotation dudit arbre (10) d'entraînement vers lesdits moyens cinématiques (11).

7. Equipement (1) selon l'une quelconque des revendications 1 à 6, dans lequel ledit curseur (5) est constitué d'une douille tubulaire et où ledit élément (6) formant une butée comprend une bride annulaire qui se trouve à une extrémité (5a) dudit curseur (5) et qui définit un plan (6a) de butée.

8. Equipement (1) selon l'une quelconque des revendications 1 à 6, dans lequel ledit élément (7) formant une butée est une rondelle attachée au piston (4) à une extrémité (4a) de celui-ci et présentant une surface (7a) de butée.

9. Equipement (1) selon les revendications 7 et 8, dans lequel ladite surface (7a) de butée est conçue pour venir en butée contre ledit plan (6a) de butée afin d'arrêter la course dudit piston (4).

10. Machine (100) permettant d'usiner une pièce, comprenant :
une structure de soutien,
un moyen de guidage attaché à ladite structure de soutien,
- un élément (2) formant un support monté à coulissement sur ledit moyen de guidage afin de se déplacer dans une direction (X-X), ledit élément (2) formant un support étant conçu pour soutenir ladite pièce,
un équipement (1) permettant de positionner ledit élément (2) formant un support conformément à l'une quelconque des revendications 1 à 9.

11. Machine (100) permettant de souder ensemble une première section (103) et une deuxième section (104), comprenant :
- une structure de soutien,
- de premiers (101) et deuxièmes moyens de guidage attachés à ladite structure de soutien,
- un premier élément (2) formant un support, à même de soutenir ladite première section (103), ledit premier élément (2) formant un support étant monté à coulissement sur lesdits premiers moyens (101) de guidage afin de se déplacer le long d'une première direction (X-X),
- un deuxième élément (102) formant un support à même de soutenir ladite deuxième section (104), ledit deuxième élément (102) formant un support étant monté à coulissement sur ledit deuxième moyen de guidage, afin de se déplacer dans une deuxième direction (Y-Y),
- un équipement (1) permettant de positionner ledit premier élément (2) formant un support conformément à l'une quelconque des revendications 1 à 9,
- un moyen (18) de synchronisation couplé audit premier élément (2) formant un support et audit deuxième élément (102) formant un support, afin de synchroniser le mouvement dudit deuxième élément (102) formant un support avec le mouvement dudit premier élément (2) formant un support entraîné à proximité par ledit équipement (1) de manière à ce qu'à la suite du mouvement du premier élément (2) formant un support suivant une distance particulière (S) le long de ladite première direction (X-X), il se produise un mouvement correspondant du deuxième élément (102) formant un support suivant la même distance (S) le long de ladite deuxième direction (Y-Y).
